# EUROPÄISCHE PATENTSCHRIFT

(11) **EP 1 651 493 B1**
(45) Veröffentlichungstag und Bekanntmachung des Hinweises auf die Patenterteilung: **21.02.2007**
(21) Anmeldenummer: 04740912.3
(22) Anmeldetag: 12.07.2004
(51) Int. Cl.: B60T 17/22, B60T 17/02, B60T 17/18, B60T 13/68

(54) **VERFAHREN UND VORRICHTUNG ZUM ERKENNEN EINES AUSFALLS EINES DRUCKLUFTVERBRAUCHERKREISES IN EINER ELEKTRONISCHEN DRUCKLUFTANLAGE FÜR FAHRZEUGE**
METHOD AND DEVICE FOR IDENTIFYING MALFUNCTIONING OF A COMPRESSED AIR CONSUMER CIRCUIT IN AN ELECTRONIC COMPRESSED AIR SYSTEM FOR A VEHICLE
PROCEDE ET DISPOSITIF POUR DETECTER UNE DEFAILLANCE D'UN CIRCUIT CONSOMMATEUR D'AIR COMPRIME DANS UN SYSTEME ELECTRONIQUE A AIR COMPRIME POUR DES VEHICULES

(30) Priorität: 28.07.2003 DE 10334316; 10.12.2003 DE 10357766
(43) Veröffentlichungstag der Anmeldung: 03.05.2006
(73) Patentinhaber: WABCO GmbH, 30453 Hannover (DE)
(72) Erfinder: DETLEFS, Carsten, 30952 Ronnenberg (DE); DIEKMEYER, Heinrich, 30890 Barsinghausen (DE); LIPPELT, Frank-Dietmar, 30890 Barsinghausen (DE); REINHARDT, Joachim, 30455 Hannover (DE); STRILKA, Bernd, 30459 Hannover (DE)
(74) Vertreter: Günther, Constantin
(86) Internationale Anmeldenummer: PCT/EP2004/007652
(87) Internationale Veröffentlichungsnummer: WO 2005/014360

(56) Entgegenhaltungen:
- EP-A- 0 810 136
- EP-A- 1 004 495
- EP-A- 1 122 140
- WO-A-96/34785

## Beschreibung

Die Erfindung betrifft ein Verfahren gemäß Oberbegriff des Anspruchs 1 und eine Vorrichtung gemäß Oberbegriff des Anspruchs 4 zum Erkennen eines Ausfalls eines Druckluftverbraucherkreises in einer elektronischen Druckluftanlage für Fahrzeuge. Die Dokumente WO 96/34785, EP 1004495, und EP 0810136 beschreiben gattungsgemäße Druckmittelanlagen.

Es sind so genannte Mehrkreis-Schutzventile bekannt, die die Energiezufuhr in mehrere voneinander unabhängige Verbraucherkreise aufteilen und die bei Ausfall eines Verbraucherkreises, bspw. durch Leitungsbruch, einen Mindestdruck in den intakten Kreisen aufrechterhalten. Tritt in einem Betriebsbremskreis ein Defekt auf, durch den mehr Luft verloren geht als durch den Kompressor nachgefördert werden kann, so fällt in den Betriebsbremskreisen der Druck gemeinsam ab, bis der Druck den Schließdruck des Ventils erreicht. Der Druck im defekten Kreis fällt weiter ab, während der Schließdruck im intakten Kreis erhalten bleibt. Während der Druck im defekten Kreis weiter absinkt, kann der noch intakte Kreis wieder durch den Kompressor befüllt werden, bis der Öffnungsdruck des defekten Kreises erreicht ist. Es entsteht ein dynamisches Gleichgewicht, bei welchem die geförderte Druckluft die noch intakten Kreise (auch Nebenverbraucherkreise) versorgen kann, gleichzeitig über den Defekt jedoch Luft verloren geht. Bei einem zeitlich begrenzten Druckluftverbrauch, beispielsweise einem starken Abbremsen, treten kurzzeitige dynamische Drückeinbrüche auf, die nicht den Behälterdrücken der einzelnen Verbraucherkreise entsprechen. Dieses Verhalten ist bei Kreisen ohne Druckluftbehälter wesentlich ausgeprägter als bei Kreisen mit Druckluftbehältern. Nachteilig bei den bekannten Mehrkreisschutzventilen ist, dass diese auf solche dynamischen Druckeinbrüche reagieren und den betreffenden Kreis absperren, wenn sich der betreffende Kreis auf einem niedrigen Druckniveau befindet. Das Auftreten solcher kurzzeitigen dynamischen Druckeinbrüche führt somit bei einem niedrigen Druckniveau zu einem verfrühten Absperren von Kreisen, obwohl der jeweilige Druck nach Beendigung des Vorgangs (des Druckeinbruchs) noch oberhalb des Schließdruckes wäre.

Die Aufgabe der vorliegenden Erfindung besteht deshalb darin, ein Verfahren und eine Vorrichtung der eingangs genannten Art so auszubilden, dass ein zu frühzeitiges Absperren von Druckluftverbraucherkreisen infolge kurzer dynamischer Druckeinbrüche vermieden ist.

Diese Aufgabe wird verfahrensmäßig durch die Erfindung gemäß Anspruch 1 gelöst. Eine Vorrichtung zur Durchführung des Verfahrens ist im Anspruch 4 angegeben.

Vorteilhafte und zweckmäßige Weiterbildungen der erfindungsgemäßen Aufgabenlösung sind in den Unteransprüchen angegeben.

Die Erfindung schlägt vor, eine Zustandsgröße (Druck, Luftmenge, Luftmasse, Energie) der einzelnen Druckluftverbraucherkreise zu messen und zu prüfen, ob die gemessene Zustandsgröße oder evtl. auch die ermittelten negativen Gradienten der Zustandsgröße für eine vorgebene Zeit ein Kreisausfallkriterium erfüllen. Nur dann, wenn dieses Kreisausfallkriterium erfüllt ist, wird der entsprechende Druckluftverbraucherkreis abgesperrt. Durch diese erfindungsgemäße Maßnahme wird ein zu frühzeitiges Absperren von Druckluftverbraucherkreisen infolge kurzer dynamischer Druckeinbrüche, bspw. während intensiver Bremsvorgänge, vermieden. Es wird dadurch eine Erhöhung der Fahrzeugsicherheit durch verbesserte Energieversorgung von Druckluftverbraucherkreisen erreicht, die sich bereits durch Luftverbrauch auf einem niedrigen Druckniveau befinden. Die erfindungsgemäße Ausbildung sorgt für eine längere Druckluftversorgung von Druckluftverbraucherkreisen, die sich bereits auf einem niedrigen Druckniveau befinden.

Die Erfindung soll nachfolgend anhand eines in der beigefügten Zeichnung dargestellten Ausführungsbeispiels näher erläutert werden:

Es zeigen:

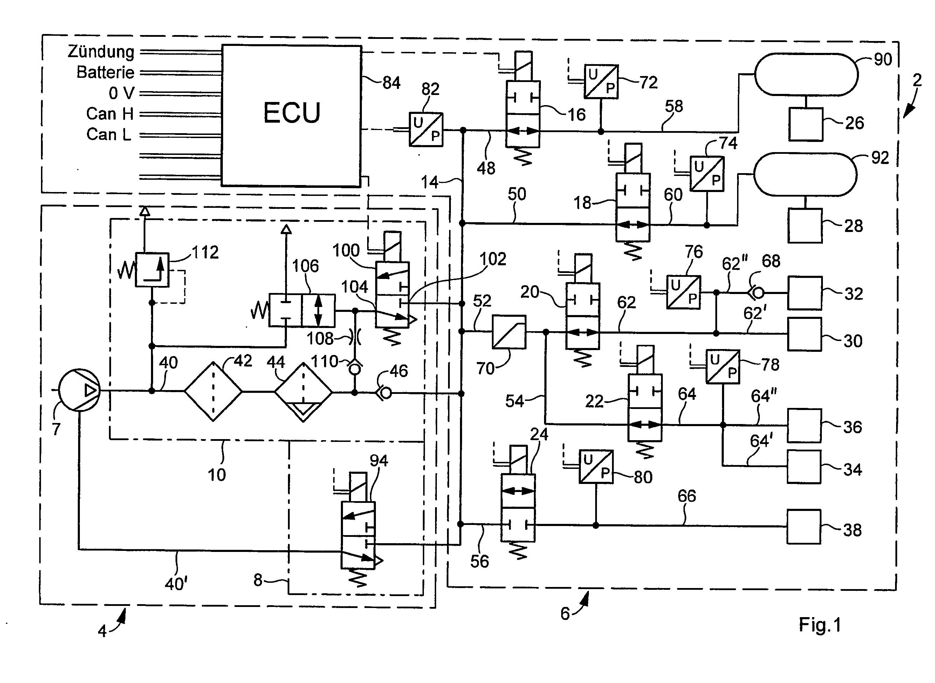

- Fig. 1: ein Blockschaltbild einer erfindungsgemäßen Vorrichtung und
- Fig. 2: ein Diagramm, das den Druckverlauf über die Zeit bei Ausfall und bei mehreren zeitlich begrenzten und aufeiander folgenden Druckluftverbräuchen eines Druckluftverbraucherkreises zeigt.

Druckmittelleitungen sind in der Zeichnung durchgezogene Linien, elektrische Leitungen sind gestrichelte Linien.

Die Zeichnung zeigt eine Druckluftanlage 2 mit einem Druckluftversorgungsteil 4 und einem Verbraucherteil 6. Der Druckluftversorgungsteil 4 umfasst einen Kompressor 7, eine Kompressor - Steuereinrichtung 8 und ein Lufttrocknerteil 10.

Der Verbraucherteil 6 weist eine Druckluftverteilerleitung 14, mehrere elektrisch betätigbare Ventile, vorzugsweise Magnetventile 16, 18, 20, 22, 24 mit Rückstellfeder und mehrere über die Magnetventile mit Druckluft versorgte Druckluftverbraucherkreise 26, 28, 30, 32, 34, 36, 38 auf.

Vom Kompressor 7 führt eine Druckluftversorgungsleitung 40 über ein Filter 42, einen Lufttrockner 44 und ein Rückschlagventil 46 zur Verteilerleitung 14, von der zu den Magnetventilen führende Leitungen 48, 50, 52, 54, 56 abzweigen. Von den Magnetventilen führen Druckluftleitungen 58, 60, 62, 64, 66 zu den Verbraucherkreisen. Die Leitung 62 verzweigt sich in zu den Kreisen 30 und 32 führenden Leitungen 62', 62" , wobei in der Leitung 62" noch ein Rückschlagventil 68 angeordnet ist. In der Versorgungsleitung 52 ist ein Druckbegrenzer 70 angeordnet. Hinter dem Druckbegrenzer 70 zweigt die zum Magnetventil 22 führende Leitung 54 ab. Die Leitung 64 verzweigt sich in zu den Kreisen 34 und 36 führenden Leitungen 64' und 64" .

Drucksensoren 72, 74, 76, 78, 80, 82 überwachen den Druck in den Druckluftverbraucherkreisen und in der Verteilerleitung 14 und geben den jeweiligen Druck als Drucksignal an eine elektronische Steuereinheit 84, die die Magnetventile steuert.

Die Druckluftverbraucherkreise 26, 28 können beispielsweise Betriebsbremskreise sein. Der Druckluftverbraucherkreis 30 kann ein Anhängerbremskreis sein, wobei normalerweise zwei Leitungen, eine Versorgungs- und eine Bremsleitung, zum Anhänger führen. Der Druckluftverbraucherkreis 32 kann ein Feststellbremskreis mit Federspeicher sein. Die Druckluftverbraucherkreise 34 und 36 können Nebenverbrauchskreise, wie Fahrerhausfederung, Türsteuerung etc., d.h. alles was nichts mit den Bremskreisen zu tun hat, sein. Der Druckluftverbraucherkreis 38 kann ein Hochdruckkreis sein.

Die Betriebsbremskreise 26, 28 weisen Druckluftbehälter 90, 92 entsprechend den Richtlinien 98/12/ EG auf.

Die erfindungsgemäße Vorrichtung bzw. Druckluftanlage ermöglicht, auf Druckluftbehälter in den Kreisen 30, 32, 34, 36 und auch im Hochdruckkreis 38 zu verzichten. Es ist z.B. zulässig, andere Druckluftverbraucherkreise aus den Betriebsbremskreisen (Kreise 26 und 28) zu versorgen, wenn die Bremsfunktion oder Bremswirkung der Betriebsbremskreise 26 und 28 nicht beeinträchtigt wird.

Der Kompressor 7 wird über die Kompressorsteuerung 8 mechanisch (pneumatisch) über eine Leitung 40' gesteuert. Die Kompressorsteuerung 8 umfasst ein durch die elektronische Steuereinheit 84 schaltbares Magnetventil 94 mit kleiner Nennweite, das im stromlosen Grundzustand, wie dargestellt, entlüftet ist, wodurch der Kompressor eingeschaltet ist. Wenn der Kompressor 7 abgeschaltet werden soll, weil beispielsweise sämtliche Druckluftverbraucherkreise mit Druckluft aufgefüllt sind, schaltet die Steuereinheit 84 das Magnetventil 94 um, so dass der druckbetätigbare Kompressor über die Leitung 40' abgeschaltet wird. Wird das Magnetventil 94, weil beispielsweise ein Druckluftverbraucherkreis Druckluft benötigt, stromlos geschaltet, wird das Magnetventil 94 wieder in den in der Zeichnung dargestellten Grundzustand geschaltet, wodurch die Leitung 40' entlüftet und der Kompressor 7 eingeschaltet wird.

Der Lufttrocknerteil 10 umfasst ein Magnetventil 100 mit kleiner Nennweite, dessen Eingang 102 mit der Verteilerleitung 14 verbunden ist und über dessen Ausgang 104 ein Abschaltventil 106 pneumatisch geschaltet wird, das mit der Versorgungsleitung 40 des Kompressors 7 verbunden ist und zum Entlüften des Lufttrockners dient.

Wenn das Magnetventil 100 durchgeschaltet ist, fördert der Kompressor 7 nicht mehr in die Druckluftverbraucherkreise, sondern über das Ventil 106 ins Freie. Gleichzeitig strömt trockene Luft aus der Verteilerleitung 14 (aus den Behältern 90, 92 der Betriebsbremskreise) über das Magnetventil 100 über eine Drossel 108 und ein Rückschlagventil 110 durch den Lufttrockner 44 zur Regeneration seines Trockenmittels und weiter über den Filter 42 und das Ventil 106 ins Freie.

Das Bezugszeichen 112 bezeichnet ein Überdruckventil.

Die Magnetventile 16,18,20,22,24 werden von der Steuereinheit 84 gesteuert, wobei die Magnetventile 16 bis 22 der Druckluftverbraucherkreise 26 bis 34 im stromlosen Grundzustand offen sind, während das Magnetventil 24 des Hochdruckkreises im stromlosen Grundzustand geschlossen ist. Es können auch vorgesteuerte Magnetventile eingesetzt werden. Der Druck in den Kreisen wird unmittelbar an den Magnetventilen durch die Drucksensoren 72,74,76,78,80 überwacht.

Durch diese erfindungsgemäße Ausbildung ist es möglich, Druckbehälter bei den Verbraucherkreisen (außer bei den Betriebsbremskreisen) einzusparen.

Sollte in einem Druckluftverbraucherkreis, beispielsweise im Kreis 30 (Anhängerbremskreis) der Druck absinken, erfolgt die Druckluftversorgung durch die Betriebsbremskreise 26 und 28 mit, wobei der Druck in den Druckluftverbraucherkreisen 30 bis 36 durch den Druckbegrenzer 70 auf ein niedrigeres Niveau, beispielsweise 8,5 bar, als das Druckniveau, beispielsweise 10,5 bar, des Betriebsbremskreises eingestellt wird. Der Hochdruckkreis 38 ist abgesperrt und steht somit nicht mit den übrigen Kreisen in Verbindung. Der Hochdruckkreis weist in der Regel einen höheren Druck als die anderen Druckluftverbraucherkreise auf, bspw. 12,5 bar.

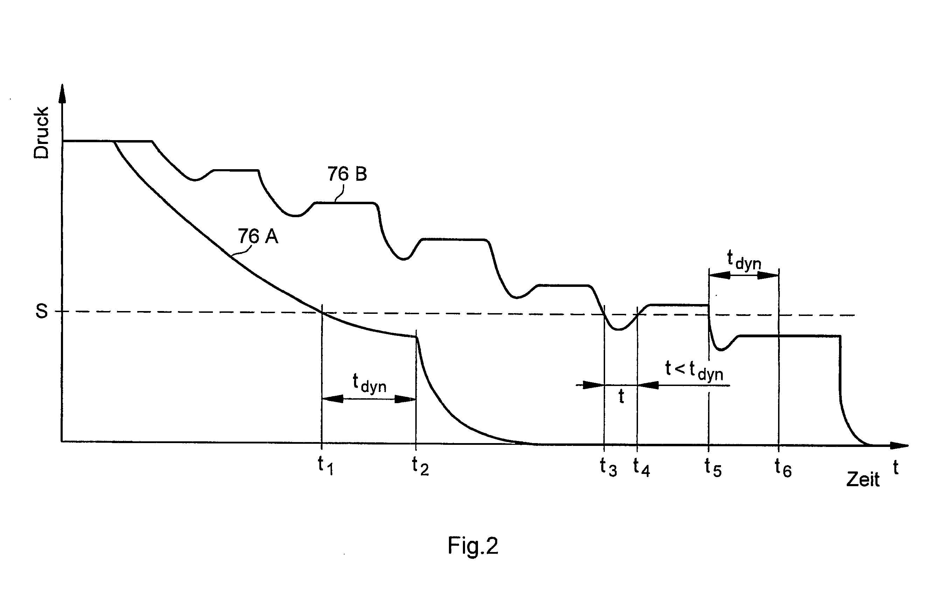

Bei Druckluftverbraucherkreisen, die sich durch Luftverbrauch schon auf einem niedrigen Druckniveau befinden, besteht die Gefahr, dass bei Auftreten betriebsbedingter, zeitlich begrenzter dynamischer Druckeinbrüche, bspw. bei Bremsvorgängen, die betreffenden Druckluftverbraucherkreise bei Verwendung herkömmlicher Mehrkreisschutzventile sofort abgesperrt werden, obwohl kein Defekt durch Leitungsabriss o. dgl. vorliegt. Um dies zu vermeiden, ist erfindungsgemäß vorgesehen, dass die elektronische Steuereinheit 84 die Drücke in den einzelnen Druckluftverbraucherkreisen misst und/oder negative Druckgradienten ermittelt und diese jeweils mit einem vorgebbaren unteren Schwellwert S vergleicht, vgl. Fig. 2. Der Druckschwellwert entspricht dem einzustellenden Druck im jeweiligen Druckluftverbraucherkreis. Unterschreitet der Druck diesen Schwellwert und/oder unterschreitet der negative Druckgradient einen entsprechenden Schwellwert deutet dies auf einen Defekt im betreffenden Druckluftverbraucherkreis durch Leitungsbruch, - abriss o. dgl. hin. Um zu einer Gewissheit zu gelangen, ob die Schlussfolgerung zutrifft, wird geprüft, ob ein Kreisausfallkriterium erfüllt ist. Hierzu werden die Druckmessungen über eine vorgebbare Zeit t durchgeführt, vgl. Fig. 2. Das Kreisausfallkriterium ist erfüllt, wenn die Druckwerte und/oder Druckgradienten den jeweiligen Schwellwert über eine Zeit t unterschreiten, die gleich oder größer ist als die Zeit t_{dyn} einer dynamischen Druckänderung bzw. eines dynamischen Druckeinbruchs (t≥t_{dyn}). Erst wenn der Schwellwert S also für eine Zeit t≥t_{dyn} unterschritten wird, wird endgültig festgestellt, dass der betreffende Druckluftverbraucherkreis defekt ist, wobei t_{dyn} die Zeit vom Beginn bis zum Ende eines dynamischen Druckeinbruchs darstellt. Der betreffende Druckluftverbraucherkreis wird dann abgesperrt. Hierdurch werden betriebsbedingte dynamische Vorgänge kompensiert, die sonst zum nachteiligen vorzeitigen Absperren des betreffenden Druckluftverbraucherkreises führen würden. Die Zeit t_{dyn} ist im Programm der Steuereinheit 84 abgelegt oder wird aktuell gemessen. Eine typische Zeit für t_{dyn} ist z.B. 1 sec.

Das in der Fig. 2 dargestellte Diagram zeigt mit der Kurve 76 A den Druckverlauf beispielsweise im Druckluftverbraucherkreis 30 bei Ausfall dieses Kreises. Der Schwellwert S wird zum Zeitpunkt t₁ unterschritten und ist zum Zeitpunkt t₂ nach Ablauf einer Zeit t ≥ t₂-t₁ ≥ t_{dyn} weiterhin unterschritten. Die elektronische Steuereinheit 84 erkennt dann auf Ausfall des Druckluftverbraucherkreises 30 und sperrt den Kreis durch Schließen des Magnetventiles 20 ab, da das Kreisausfallkriterium erfüllt ist.

Die Kurve 76 B in der Fig. 2 stellt den Druckverlauf bei mehreren zeitlich begrenzten und aufeinander folgenden dynamischen Druckluftverbräuchen dar. Zum Zeitpunkt t₃ unterschreitet im Beispiel nach Fig. 2 der Druck erst beim fünften dynamischen Druckluftverbrauch den Schwellwert S. Zum Zeitpunkt t₄ überschreitet der Druck den Schwellwert wieder und ist somit der dynamische Druckluftverbrauch beendet. Da die Zeit t = t₄-t₃<t_{dyn} ist, erfolgt kein Absperren des betreffenden Kreises, da das Kreisausfallkriterium nicht erfüllt ist. Erst beim nachfolgenden dynamischen Druckluftverbrauch unterschreitet der Druck den Schwellwert S ab dem Zeitpunkt t₅ über eine Zeit t ≥ t₆-t₅ ≥ t_{dyn}. Damit ist das Kreisausfallkriterium erfüllt und der betreffende Kreis wird abgesperrt.

Anstelle des Druckes können auch andere Zustandsgrößen, wie Luftmenge, Luftmasse, Energie, der Druckluftverbraucher überwacht werden.

## Patentansprüche

1. Verfahren zum Erkennen eines Ausfalls eines Luftverbraucherkreises in einer Druckluftanlage für Fahrzeuge, bei dem der Istwert einer Zustandsgröße in den Druckluftverbraucherkreisen laufend gemessen und in einer elektronischen Steuereinheit ausgewertet wird, **gekennzeichnet durch** folgende Schritte:
- Vergleich der Werte der Zustandsgröße und/oder der negativen Gradienten der Zustandsgröße der Druckluftverbraucherkreise jeweils mit einem Schwellwert und
- Absperren des betreffenden Druckluftverbraucherkreises, wenn die Werte der Zustandsgröße und/oder des negativen Zustandsgrößengradienten ein Kreisausfallkriterium erfüllen.

2. Verfahren nach Anspruch 1, **dadurch gekennzeichnet, dass** das Kreisausfallkriterium erfüllt ist, wenn die Zustandsgrößenwerte und/oder -gradienten den jeweiligen Schwellwert über eine Zeit t unterschreiten, die gleich oder größer ist als die Zeit t_{dyn} einer dynamischen Änderung der Zustandsgröße bzw. eines dynamischen Einbruchs der Zustandsgröße

3. Verfahren nach Anspruch 1 oder 2, **dadurch gekennzeichnet, dass** der Zustandsgrößenschwellwert dem einzustellenden Wert der Zustandsgröße des jeweiligen Druckluftverbraucherkreises entspricht.

4. Vorrichtung zum Erkennen eines Ausfalls eines Druckluftverbraucherkreises mit einer Druckluftanlage, die einen einen Kompressor aufweisenden Druckluftversorgungsteil und einen Verbraucherteil mit mehreren Druckluftverbraucherkreisen aufweist, die über elektrisch betätigbare Ventile mit Druckluft versorgt werden, wobei der Druck in den Druckluftverbraucherkreisen durch Sensoren überwacht wird, deren elektrische Signale von einer elektronischen Steuereinheit ausgewertet werden, die die elektrisch betätigbaren Ventile steuert, **dadurch gekennzeichnet, dass** die elektrisch betätigbaren Ventile (16, 18, 20, 22) der Druckluftverbraucherkreise (26, 28, 30, 32, 34, 36) offen sind und dass zur Erkennung des Ausfalls eines Druckluftverbraucherkreises die Steuereinheit (84) ermittelte Werte einer Zustandsgröße und/oder negative Zustandsgrößengradienten jeweils mit einem Schwellwert vergleicht und einen Druckluftverbraucherkreis als defekten oder ausgefallenen Kreis ermittelt und das diesem Druckluftverbraucherkreis zugeordnete Ventil zum Absperren des betreffenden Kreises in den Sperrzustand schaltet, wenn dessen Druckwerte und/oder negative Druckgradienten ein Kreisausfallkriterium erfüllen.

5. Vorrichtung nach Anspruch 4, **dadurch gekennzeichnet, dass** das Kreisausfallkriterium erfüllt ist, wenn die Werte und/oder Gradienten der überwachten Zustandsgröße den jeweiligen Schwellwert über eine Zeit t unterschreiten, die gleich oder größer ist als die Zeit t_{dyn} einer dynamischen Änderung der Zustandsgröße bzw. eines dynamischen Einbruchs der Zustandsgröße.

6. Vorrichtung nach Anspruch 4, **dadurch gekennzeichnet, dass** der Zustandsgrößenschwellwert dem Wert der einzustellenden Zustandsgröße des jeweiligen Luftverbraucherkreises entspricht.

7. Vorrichtung nach Anspruch 4, **dadurch gekennzeichnet, dass** die elektrisch betätigbaren Ventile Magnetventile sind.

## Claims

1. Method of detecting a failure of an air utilisation circuit in a compressed air system for vehicles, wherein the actual value of a state variable in the compressed air utilisation circuits is continuously measured and evaluated in an electronic control unit, **characterised by** the following steps:
- comparing values of the state variable and/or negative gradients of the state variable of the compressed air utilisation circuits with a respective threshold value and
- shutting off the compressed air utilisation circuit concerned if the values of the state variable and/or of the negative gradient of the state variable meet a circuit failure criterion.

2. Method according to claim 1, **characterised in that** the circuit failure criterion is met if the state variable values and/or gradients are below the respective threshold value for a time t which is equal to or greater than the time t_{dyn} of a dynamic change in the state variable and/or a dynamic slump in the state variable.

3. Method according to claim 1 or 2, **characterised in that** the threshold value of the state variable corresponds to that value of the state variable which is to be established for the compressed air utilisation circuit concerned.

4. Apparatus for detecting a failure of a compressed air utilisation circuit, having a compressed air system including a compressed air supply part, comprising a compressor, and a utilising part having a plurality of compressed air utilisation circuits which are supplied with compressed air by way of electrically actuatable valves, the pressure in the compressed air utilisation circuits being monitored by sensors, the electrical signals of which sensors are evaluated by an electronic control unit which controls the electrically actuatable valves, **characterised in that** the electrically actuatable valves (16, 18, 20, 22) of the compressed air utilisation circuits (26, 28, 30, 32, 34, 36) are open; and **in that**, to detect the failure of a compressed air utilisation circuit, the control unit (84) compares determined values of a state variable and/or negative gradients of a state variable with a respective threshold value and determines a compressed air utilisation circuit as being a circuit which is defective or which has failed and switches the valve associated with that compressed air utilisation circuit into the shut-off state in order to shut off the circuit concerned, if the latter's pressure values and/or negative pressure gradients meet a circuit failure criterion.

5. Apparatus according to claim 4, **characterised in that** the circuit failure criterion is met if the values and/or gradients of the monitored state variable are below the respective threshold value for a time t which is equal to or greater than the time t_{dyn} of a dynamic change in the state variable and/or a dynamic slump in the state variable.

6. Apparatus according to claim 4, **characterised in that** the threshold value of the state variable corresponds to the value of the state variable which is to be established for the compressed air utilisation circuit concerned.

7. Apparatus according to claim 4, **characterised in that** the electrically actuatable valves are solenoid valves.

## Revendications

1. Procédé pour détecter une défaillance d'un circuit consommateur d'air dans un système à air comprimé pour véhicules, dans lequel la valeur réelle d'un paramètre d'état est mesurée en permanence dans les circuits consommateurs d'air comprimé et évaluée dans une unité de commande électronique, **caractérisé par** les étapes suivantes:
- la comparaison des valeurs du paramètre d'état et/ou des gradients négatifs du paramètre d'état des circuits consommateurs d'air comprimé respectivement à une valeur de seuil et
- la coupure du circuit consommateur d'air comprimé concerné, lorsque les valeurs du paramètre d'état et/ou du gradient négatif de paramètre d'état remplissent un critère de défaillance de circuit.

2. Procédé selon la revendication 1, **caractérisé en ce que** le critère de défaillance de circuit est rempli, lorsque les valeurs et/ou les gradients de paramètre d'état tombent au-dessous de la valeur de seuil respective pendant un temps t, qui est égal ou supérieur au temps t_{dyn} d'une modification dynamique du paramètre d'état ou d'une chute dynamique du paramètre d'état.

3. Procédé selon la revendication 1 ou 2, **caractérisé en ce que** la valeur de seuil de paramètre d'état correspond à la valeur à régler du paramètre d'état du circuit consommateur d'air comprimé respectif.

4. Dispositif pour détecter une défaillance d'un circuit consommateur d'air comprimé comportant un système à air comprimé, qui présente une partie d'alimentation en air comprimé possédant un compresseur et une partie de consommation comprenant plusieurs circuits consommateurs d'air comprimé, qui sont alimentés en air comprimé par l'intermédiaire de soupapes commandées électriquement, dans lequel la pression dans les circuits consommateurs d'air comprimé est surveillée par des capteurs, dont les signaux électriques sont évalués par une unité de commande électronique, qui commande les soupapes commandées électriquement, **caractérisé en ce que** les soupapes commandées électriquement (16, 18, 20, 22) des circuits consommateurs d'air comprimé (26, 28, 30, 32, 34, 36) sont ouvertes et **en ce que**, pour détecter la défaillance d'un circuit consommateur d'air comprimé, l'unité de commande (84) compare les valeurs détectées d'un paramètre d'état et/ou les gradients négatifs de paramètre d'état respectivement à une valeur de seuil et détecte un circuit consommateur d'air comprimé comme étant défectueux ou un circuit défaillant et commute dans un état de coupure la soupape associée à ce circuit consommateur d'air comprimé pour couper le circuit concerné, lorsque ses valeurs de pression et/ou gradients de pression négatifs remplissent un critère de défaillance de circuit.

5. Dispositif selon la revendication 4, **caractérisé en ce que** le critère de défaillance de circuit est rempli, lorsque les valeurs et/ou les gradients du paramètre d'état surveillé tombent au-dessous de la valeur de seuil respective pendant un temps t, qui est égal ou supérieur au temps t_{dyn} d'une modification dynamique du paramètre d'état ou d'une chute dynamique du paramètre d'état.

6. Dispositif selon la revendication 4, **caractérisé en ce que** la valeur de seuil de paramètre d'état correspond à la valeur du paramètre d'état à régler du circuit consommateur d'air respectif.

7. Dispositif selon la revendication 4, **caractérisé en ce que** les soupapes commandées électriquement sont des électrovannes.
